# EUROPEAN PATENT SPECIFICATION

(11) **EP 1 138 529 B1**
(45) Date of publication and mention of the grant of the patent: **15.09.2004**
(21) Application number: 01201214.2
(22) Date of filing: 02.04.2001
(51) Int. Cl.: B60D 1/06, B60D 1/28

(54) **Trailer coupling with friction damper**
Anhängerkupplung mit Reibungsdämpfer
Attelage de remorque avec amortisseur à friction

(30) Priority: 31.03.2000 NL 1014815
(43) Date of publication of application: 04.10.2001
(73) Proprietor: Sanders, Teun Johan Hugo Leendert, 6862 WG Oosterbeek (NL)
(72) Inventor: Sanders, Teun Johan Hugo Leendert, 6862 WG Oosterbeek (NL)
(74) Representative: 't Jong, Bastiaan Jacob

(56) References cited:
- EP-A- 0 320 202
- DE-A- 1 430 660
- NL-A- 9 002 357
- NL-C- 1 010 010
- US-A- 2 855 222
- US-A- 3 888 517
- US-A- 4 209 184

## Description

The invention relates to a trailer coupling for coupling to a towing ball, as defined in the introduction part of claim 1.

Trailer couplings with a slidable coupling member are per se known, e.g. from EP-A-0 320 202. As an advantage of such couplings can be stated that they are compact and can therefore be constructed with a relatively low weight. A drawback is that a transmission of a control handle onto the slidable coupling member is generally difficult to realize. A suitable construction is particularly difficult in an embodiment with friction damper, wherein the friction-coupling surfaces must be pressed with a determined preloading onto the towing ball.

The invention therefore has for its object to provide a trailer coupling of the type specified in the preamble which has the advantage of a safe, compact, light structure which is moreover user-friendly.

This object is achieved in the trailer coupling as characterized in claim 1.

In the coupling according to the invention the drive of the movable coupling member, i.e. the movement thereof from the open to the closed position, is realized substantially by the lever. When the coupling is placed in the opened position on the towing ball, the ball comes into contact with the first part of the lever and, as the coupling is lowered further onto the towing ball, this first part of the lever will move upward relative to the coupling housing and the second part of the lever will herein move the slidable coupling part from the open to the closed position. The coupling housing and the second part of the lever will herein move the slidable coupling part from the open to the closed position. The slidable coupling member then only need be blocked. Only a small displacement is sufficient for blocking, so that the operation of the coupling according to the invention is simple. The lever also ensures that in the closed situation the coupling remains self-locking and is also blocked.

The measure of claim 2 is preferably applied. For the purpose of blocking the cam member is pivoted into the blocking position, whereafter the slidable coupling member is no longer displaceable.

The measure of claim 3 is applied here in suitable manner. A reactive force of the slidable coupling member on the cam member cannot hereby result in unblocking of the cam member.

In accordance with a favourable further development, the measure of claim 4 is applied. In this manner a large transmission ratio of the control handle on the cam member can be realized in that the slidable coupling member can be blocked in a closed position with little force, wherein a good press-on force of the hollow friction surfaces on the towing ball is realized in order to achieve a good damping of possible snaking movements of the trailer.

According to a very suitable embodiment the cam arm takes an elastically bendable form. The cam arm then functions as resilient element which makes possible the pressed-down position of the knee lever mechanism in suitable manner and therein ensures securing of this pressed-down position of the knee lever mechanism.

The measure of claim 6 is preferably applied here. A leaf spring can easily be given the elastic properties desirable for the specific application.

According to a further favourable embodiment the construction of claim 7 is applied here. The mounting of the leaf spring can take place in simple manner by inserting the bent end part of the leaf spring into the recess of the cam member and subsequently fixing the cam member in its position by arranging the pivot shaft. The leaf spring is herein simultaneously connected fixedly to the cam member.

In order to achieve a long life-span of the trailer coupling according to the invention and to realize a favourable low weight herein, the measure of claim 8 is preferably applied.

Application of the measure of claim 9 enables the user to visually check whether the towing ball has been received in the coupling in the correct manner.

The measure of claim 8 is applied in favourable manner for the purpose of theft prevention. The locking means prevent the blocking means being activated in undesired manner for release of the coupling.

A very suitable embodiment of the locking means is characterized in claim 10. Approved standardized profile cylinders are obtainable at relatively low cost. By incorporating such a profile cylinder in the coupling according to the invention a lockable coupling can thus be realized at low cost which could satisfy insurance company requirements in respect of theft prevention.

Because the locking action is moreover realized without additional moving means, a very efficient embodiment of these locking means is obtained.

The invention will be further elucidated in the following description with reference to the annexed figures.
Figure 1 shows a perspective view of an embodiment of the trailer coupling according to the invention.
Figure 2 shows the coupling of figure 1 in partly cross-sectional, perspective view in the open position, and
Figure 3 shows in a view corresponding with figure 2 the coupling of figure 1 in the closed position.
Figure 4 shows a longitudinal section of a coupling according to the invention in another embodiment.

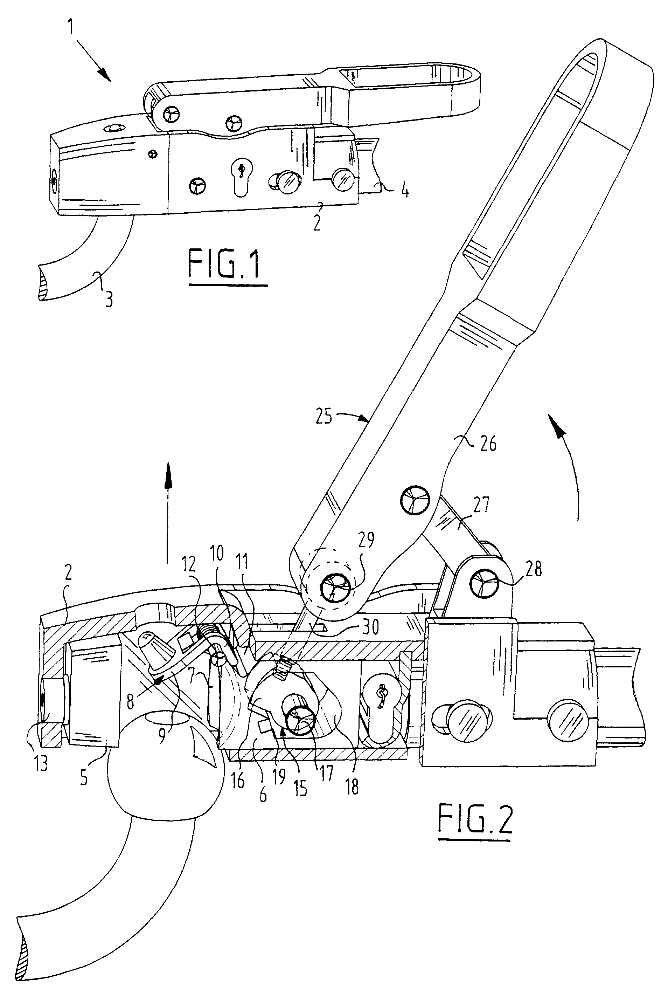

The trailer coupling 1 shown in figure 1 is arranged in the usual manner on the drawbar 4 of a trailer. The trailer is coupled by means of trailer coupling 1 to a towing ball 3, the ball-shaped outer end of which is received in the coupling.

Coupling 1 comprises a housing 2 in which are arranged a first coupling member 5 and a second coupling member 6. The first coupling member 5 is mounted on housing 2 in adjustable manner using a screw 13, but not rotatably.

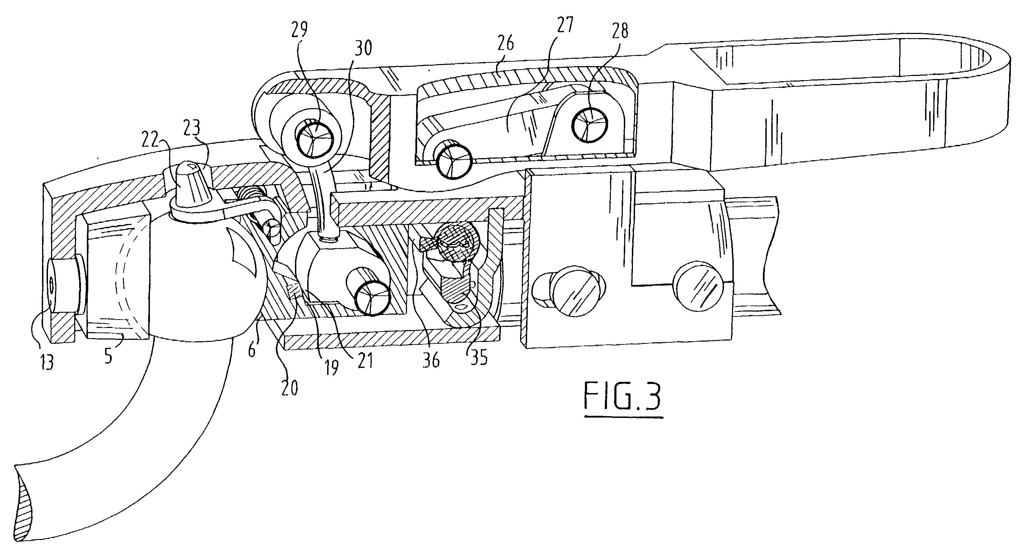

The second coupling member 6 is arranged slidably in housing 2. It can slide between the open position shown in figure 2 and the closed position shown in figure 3.

The coupling members 5, 6 are provided on their mutually facing surfaces with hollow coupling surfaces with a radius of curvature corresponding with that of the ball-shaped outer end of towing ball 3. In the closed position shown in figure 3 the coupling members 5, 6 can therefore receive between them this ball-shaped outer end of towing ball 3.

In the embodiment shown here the coupling surfaces are provided with a friction material and the first coupling member 5 is adjusted by means of the adjusting screw 13 such that in the closed position of figure 3 the coupling members are pressed with force against the ball, so that a friction force must be overcome when there is a relative movement of coupling 1 and towing ball 3. This friction force has a damping effect, whereby the tendency of the trailer to snake in relation to the pulling vehicle is effectively damped.

Mounted in housing 2 of the coupling is a lever 8 which is pivotable on a shaft 12 and comprises a first part 9 which in the open position protrudes between the coupling members and a second part 10 which engages in a recess 11 of the slidable coupling member 6. It will be apparent from a comparison of figure 2 and figure 3 that when coupling 1 is placed on towing ball 3 the first part 8 of lever 9 will first come into contact with the top part of towing ball 3. As the coupling moves further downward the lever 8 will pivot on shaft 12, wherein the second part 10 of lever 8 will move to the left as seen in the figures. This movement of the second part 8 directed to the left displaces the slidable coupling member 6 in the direction toward the first coupling member 5 such that coupling members 5, 6 come to lie on either side against towing ball 3.

Arranged on the first part 9 of lever 8 is a position indicating means 22 which, in the closed position of the coupling as shown in figure 3, is visible through an opening 23 in housing 2. The user is thus provided with a clear indication that the coupling ball 3 is received at the correct height in coupling 1.

Due to the action of lever 8 the slidable coupling member 6 is thus already moved into the correct position during placing of the coupling on ball 3. This position then only needs to be fixed and the slidable member may possibly have to be pressed slightly further against the ball to enable generating of the desired damping friction force. This fixing and possible pressing-on takes place using blocking means 15, which in this embodiment comprise a cam member 16 which is pivotable on a pivot shaft 17. In the slidable coupling member 6 is formed a recess 18 in which the cam member 16 is received. As can be seen in the figures, the form of recess 18 is such that when cam member 18 is pivoted to the right, the slidable coupling member 6 can move freely to the right. In the position of the coupling member 6 moved to the left the cam member 16 can now be pivoted down, wherein a contact surface 21 of the cam member comes to lie against a co-acting contact surface 19 of the slidable coupling member 6. The possible pressing-on of the slidable coupling member 6 can be effected by an appropriate design of the contact surfaces.

In the embodiment shown here the slidable coupling member 6 is manufactured from a light metal casting and a wear-resistant insert 20 is arranged in contact surface 19, so that the relative friction which occurs when the cam member is pivoted into the closed position of figure 3 cannot result in damage to the contact surface 19 of coupling member 6.

In the embodiment drawn here the contact surface 19 is embodied parallel to pivot shaft 17, so that a rearward directed force on coupling member 6 cannot result in a reactive force on the cam member which could cause it to pivot upward.

Cam member 16 is connected to a cam arm 30 protruding transversely of pivot shaft 17. Using this cam arm 30 the cam member can be pivoted between the position shown in figure 2 and the blocking position shown in figure 3. Arranged to cause pivoting of cam arm 30 is a knee lever mechanism 25, of which a control handle 26 forms an important part. On the end of control handle 26 the cam arm 30 is connected thereto by means of a hinge 29. Control handle 26 is further connected pivotally to housing 2 with a pivot shaft 28 by means of a connecting arm 27.

The comparison of figures 2 and 3 will make it apparent that as the control lever 25 pivots downward the pivot point 29 of handle 26 will move forward, whereby cam member 16 is pivoted with the aid of cam arm 30 into the blocking position. The placing of the pivot shafts of connecting arm 27 is such that the handle can be pressed down further than the position in which these pivot shafts and the pivot shaft 29 lie in one line, so that the knee lever mechanism 25 is blocked in the position of figure 3.

According to an attractive aspect of the present construction the cam arm 30 is elastically bendable so that it provides a spring action, whereby knee lever 25 is held in the position shown in figure 3 and cam member 16 is simultaneously held fixedly in reliable manner in the blocking position shown in figure 3.

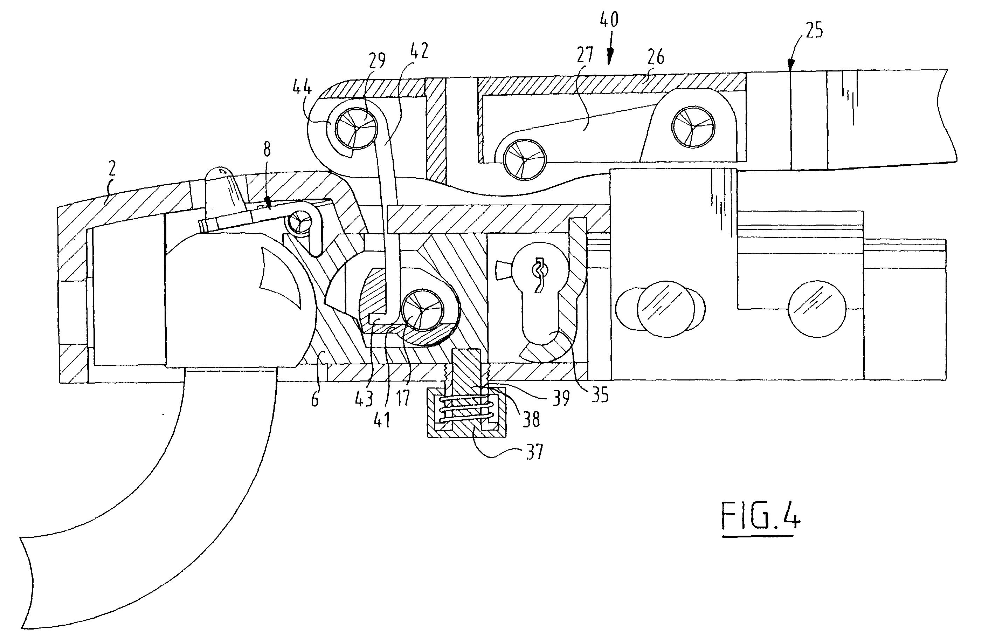

The trailer coupling 40 shown in figure 4 corresponds in significant part with the trailer coupling 1 as shown in figures 1-3. Corresponding components are therefore designated with the same reference numerals and a separate description thereof is dispensed with.

In the trailer coupling 40 the resilient arm which forms the connection between knee lever mechanism 25 and cam member 41 is formed by a leaf spring 42. This leaf spring has a bent end part 43 which is received in a close-fitting recess in cam member 41. As the figure shows, leaf spring 42 is enclosed in cam member 41 by means of pivot shaft 17 which, during mounting of cam member 41, is pushed through the housing and the cam member and fixed.

The upper end of resilient arm 42 has an end part 44 bent in circular shape through which is placed the hinge pin 29.

For a further increase in the safety of the trailer coupling according to the invention a locking pin 37 is applied. This is screwed into housing 2 using a holder 39. The pin 37 is resiliently loaded in upward direction as seen in the figure and protrudes with its upper end into a bore 38 which lies in one line with pin 37 when the slidable coupling member 6 is in the closed position shown in figure 4. The coupling can be released by pulling the pin 37 downward after the lock 35 has been placed in the opened position, whereafter the sliding member 6 can be slid rearward by operating knee lever 25.

When sliding member 6 is pushed into the closed position as a result of the above described operation of the lever 8 and the subsequent pressing-on of cam member 41 using knee lever mechanism 25, the locking pin 37 drops automatically into the bore 38.

Although locking pin 38 is drawn here on the underside of the coupling, it will be apparent that it can be arranged equally well on the side.

As the figures further show, a locking system is arranged in coupling 1 with which the coupling can be secured. This locking system comprises a per se known profile cylinder 35 which is provided in usual manner with a cam 36 with which, in a normal application, a bolt of a lock is operated. In the profile cylinder applied here, a fixed position of the rotatable part to which cam 36 is connected, i.e. a position in which an associated key can be removed, is one in which the cam 36 protrudes in the direction toward the slidable coupling member 6. Profile cylinder 35 is received in housing 2 such that, in this situation with protruding cam 36, this cam lies practically against the rear side of slidable coupling member 6, so that it prevents a return movement thereof, so that coupling member 6 cannot be moved sufficiently to the right to release the spherical part of towing ball 3.

In the situation shown in figure 2 the cam member 36 is rotated away using a key, whereby coupling member 6 can be displaced freely to the rear.

The embodiment of the coupling according to the invention shown here has a housing 2 which is embodied as a casting. It is quite possible however to embody the coupling with a housing manufactured as a pressed part of preferably non-rusting steel sheet. Owing partly to the application of light metal parts the coupling according to the invention can therefore be embodied with a low weight. Because the coupling moreover consists of only few parts, it can be manufactured at a favourable cost price.

## Claims

1. Trailer coupling (1) for coupling to a towing ball (3), comprising a coupling housing (2), first (5) and second (6) coupling members which are arranged in the housing (2) and in between which the ball will be locked in the closed position, coupling members that comprise hollow friction-coupling surfaces directed toward each other, wherein at least one of the coupling members(6)is mounted in the housing (2) for sliding between an open position at a distance from the other coupling member (5) and a closed position closer thereto, and blocking means (15) for blocking the slidable coupling member (6) in the closed position, **characterized by** a lever (8) which is mounted pivotally on the housing (2) and of which a first part (9) is movable between a first position in which it protrudes between the coupling members (5, 6) and a second position further outward, and of which a second part (10) is connected to the slidable coupling part (6) such that, when the first part (9) moves from the first to the second position, the second part (10) displaces the slidable coupling part (10) from the open to the closed position.

2. Trailer coupling as claimed in claim 1, wherein the blocking means (15) comprise a cam member(16)which is pivotable on a pivot shaft (17) and which in a blocking position lies with a contact surface (21) against a co-acting surfaced (19) of the slidable coupling member(6).

3. Trailer coupling as claimed in claim 2, wherein the contact surface (21) extends substantially parallel to the pivot shaft (17).

4. Trailer coupling as claimed in either of the claims 2-3, wherein there is connected to the cam member (16) a cam arm (30) which protrudes transversely of the pivot shaft (17) and a protruding end of which is coupled pivotally to a control lever (26) which is connected pivotally to the housing (2) by a connecting arm (27), and wherein the control lever (26) and the connecting arm (27) form a blocked knee lever mechanism (25) in the blocking position of the cam member.

5. Trailer coupling as claimed in claim 4, wherein the cam arm (30) is elastically bendable.

6. Trailer coupling as claimed in claim 5, wherein the cam arm comprises a leaf spring (42).

7. Trailer coupling as claimed in claim 6, wherein the end of the leaf spring (42) connected to the cam member comprises a bent end part (43) which is received in a recess of the cam member (41) and which is enclosed therein by a pivot shaft (17) extending through the cam member (41).

8. Trailer coupling as claimed in any of the claims 2-7, wherein the slidable coupling member(6)is manufactured from a light metal alloy and the surface (19) co-acting with the contact surface (21) of the cam member comprises a wear-resistant insert (20).

9. Trailer coupling as claimed in any of the foregoing claims, wherein the lever (8) comprises a position indicating means which in the second position is visible through an opening in the housing (2).

10. Trailer coupling as claimed in any of the foregoing claims, wherein the blocking means (15) comprise locking means for locking the slidable coupling member(6)non-displaceably in the closed position.

11. Trailer coupling as claimed in claim 10, wherein the locking means comprise a standardized profile cylinder (35) which has a bolt operating cam (36) which in an active position protrudes laterally from the profile cylinder (35), wherein the profile cylinder (35) is mounted on the housing (2) on the side of the slidable second coupling member (6) remote from the first coupling member (5) such that in its active position and in the closed position of the slidable coupling member(6)the bolt operating cam(36)lies at least practically against the coupling member (6).

## Patentansprüche

1. Anhängerkupplung (1) zum Ankuppeln an eine Zugkugel (3), mit einem Kupplungsgehäuse (2), einem ersten (5) und zweiten (6) Kupplungsglied, die in dem Gehäuse (2) angeordnet sind und zwischen denen die Kugel in der geschlossenen Stellung blockiert wird, wobei die Kupplungsglieder gegeneinander gerichtete hohle Reibkupplungsflächen aufweist, wobei mindestens eines der Kupplungsglieder (6) in dem Gehäuse (2) verschiebbar zwischen eine offenen Stellung in einem Abstand von dem anderen Kupplungsglied (5) und einer geschlossenen Stellung näher an diesem gelagert ist, und Blockiermitteln (15) zum Blockieren des verschiebbaren Kupplungsgliedes (6) in der geschlossenen Stellung, **gekennzeichnet durch** einen Hebel (8), der schwenkbar an dem Gehäuse (2) gelagert ist und von dem ein erster Teil (9) zwischen einer ersten Stellung, in der er zwischen die Kupplungsglieder (5, 6) vorsteht, und einer zweiten Stellung weiter außen bewegbar ist und von dem ein zweiter Teil (10) mit dem verschiebbaren Kupplungsteil (6) derart verbunden ist, dass bei Bewegung des ersten Teils (9) aus der ersten in die zweite Stellung der zweite Teil (10) das verschiebbare Kupplungsglied (10) aus der offenen in die geschlossene Stellung verschiebt.

2. Anhängerkupplung nach Anspruch (1), bei der die Blockiermittel (5) ein Nockenglied (16) umfassen, welches auf einer Schwenkwelle (17) schwenkbar ist und in einer Blockierstellung mit einer Anlagefläche (21) gegen eine Gegenfläche (19) des verschiebbaren Kupplungsgliedes (6) anliegt.

3. Anhängerkupplung nach Anspruch 2, bei der die Anlagefläche (21) im wesentlichen parallel zu der Schwenkachse (17) verläuft.

4. Anhängerkupplung nach Anspruch 2 oder 3, bei der mit dem Nockenglied (16) ein Nockenarm (30) verbunden ist, der quer zur Schwenkachse (17) vorsteht und dessen vorstehendes Ende schwenkbar mit einem Betätigungshebel (26) gekoppelt ist, der schwenkbar mit dem Gehäuse (2) durch einen Verbindungsarm (27) verbunden ist, wobei der Betätigungshebel (26) und der Verbindungsarm (27) in der Blockierstellung des Nockengliedes einen gesperrten Kniehebelmechanismus (25) bilden.

5. Anhängerkupplung nach Anspruch 4, bei der der Nockenarm (30) elastisch biegbar ist.

6. Anhängerkupplung nach Anspruch 5, bei der der Nockenarm eine Blattfeder (42) umasst.

7. Anhängerkupplung nach Anspruch 6, bei der das mit dem Nockenglied verbundene Ende der Blattfeder (42) einen abgebogenen Endteil (43) aufweist, der in einer Ausnehmung des Nockengliedes (41) aufgenommen ist und darin durch eine Schwenkachse (17) eingeschlossen ist, die durch das Nockenelement (41) verläuft.

8. Anhängerkupplung nach einem der Ansprüche 2 bis 7, bei der das verschiebbare Kupplungsglied (6) aus einer Leichtmetalllegierung besteht und die mit der Anlagefläche (21) des Nockengliedes gegenwirkende Fläche (19) einen abriebfesten Einsatz (20) aufweist.

9. Anhängerkupplung nach einem der vorangehenden Ansprüche, bei der der Hebel (8) ein Positionsanzeigemittel aufweist, welches in der zweiten Position durch eine Öffnung in dem Gehäuse (2) sichtbar ist.

10. Anhängerkupplung nach einem der vorangehenden Ansprüche, bei der die Blockiermittel (15) Verriegelungsmittel aufweisen, um das verschiebbare Kupplungsglied (6) in der geschlossenen Stellung unverschiebbar zu verriegeln.

11. Anhängerkupplung nach Anspruch 10, bei der die Verriegelungsmittel einen genormten Schließzylinder (35) aufweisen, der einen Schließkloben (36) zum Betätigen eines Riegels aufweist, der in einer aktiven Position seitlich von dem Schließzylinder (35) vorsteht, wobei der Schließzylinder (35) an dem Gehäuse (2) auf der von dem ersten Kupplungsglied (5) abgewandten Seite des verschiebbaren zweiten Kupplungsgliedes (6) montiert ist derart, dass in seiner aktiven Position und in der geschlossenen Position des verschiebbaren Kupplungsgliedes (6) der Schließkloben (36) mindestens praktisch gegen das Kupplungselement (6) anliegt.

## Revendications

1. Attelage de remorque (1) pour s'accoupler à une boule d'attelage (3), comprenant un boîtier d'attelage (2), des premier (5) et deuxième (6) éléments d'attelage qui sont agencés dans le boîtier (2) et entre lesquels la boule sera verrouillée dans la position fermée, éléments d'attelage qui comprennent des surfaces d'attelage à friction creuses dirigées l'une vers l'autre, dans lequel au moins l'un des éléments d'attelage (6) est monté dans le boîtier (2) pour coulisser entre une position ouverte à une distance de l'autre élément d'attelage (5) et une position fermée plus proche de lui, et des moyens de blocage (15) pour bloquer l'élément d'attelage coulissant (6) dans la position fermée, **caractérisé par** un levier (8) qui est monté de manière pivotante sur le boîtier (2) et dont une première partie (9) est mobile entre une première position dans laquelle il forme saillie entre les éléments d'attelage (5, 6) et une deuxième position plus éloignée vers l'extérieur, et dont une deuxième partie (10) est reliée à la partie d'attelage coulissante (6) en sorte que, quand la première partie (9) se déplace de la première à la deuxième position, la deuxième partie (10) déplace la partie d'attelage coulissante (10) de la position ouverte à la position fermée.

2. Attelage de remorque selon la revendication 1, dans lequel les moyens de blocage (15) comprennent un élément de came (16) qui peut pivoter sur un arbre de pivotement (17) et qui, dans une position de blocage, se trouve avec une surface de contact (21) contre une surface coopérante (19) de l'élément d'attelage coulissant (6).

3. Attelage de remorque selon la revendication 2, dans lequel la surface de contact (21) s'étend sensiblement parallèlement à l'arbre de pivotement (17).

4. Attelage de remorque selon l'une des revendications 2-3, dans lequel à l'élément de came (16) est relié un bras de came (30) qui dépasse transversalement de l'arbre de pivotement (17) et dont une extrémité saillante est couplée de manière pivotante à un levier de commande (26) qui est relié de façon pivotante au boîtier (2) par un bras de liaison (27), et dans lequel le levier de commande (26) et le bras de liaison (27) forment un mécanisme (25) de levier à genouillère bloqué dans la position de blocage de l'élément de came.

5. Attelage de remorque selon la revendication 4, dans lequel le bras de came (30) est flexible élastiquement.

6. Attelage de remorque selon la revendication 5, dans lequel le bras e came comprend un ressort à lame (42).

7. Attelage de remorque selon la revendication 6, dans lequel l'extrémité du ressort à lame (42) reliée à l'élément de came comprend une partie d'extrémité fléchie (43) qui est logée dans un renfoncement de l'élément de came (41) et qui y est enfermé par un arbre de pivotement ( 17) s'étendant à travers l'élément de came (41).

8. Attelage de remorque selon l'une des revendications 2 à 7, dans lequel l'élément d'attelage coulissant (6) est fabriqué à partir d'un alliage en métal léger et la surface (19) coopérant avec la surface de contact (21) de l'élément de came comprend un insert (20) résistant à l'usure.

9. Attelage de remorque selon l'une des revendications précédentes, dans lequel le levier (8) comprend des moyens indicateurs de position qui, dans la deuxième position, sont visibles à travers une ouverture dans le boîtier (2).

10. Attelage de remorque selon l'une des revendications précédentes, dans lequel les moyens de blocage (15) comprennent des moyens de verrouillage pour verrouiller l'élément d'attelage coulissant (6) de manière non déplaçable dans la position fermée.

11. Attelage de remorque selon la revendication 10, dans lequel les moyens de verrouillage comprennent un cylindre à profil standardisé (35) qui a une came d'actionnant de boulon (36) qui, dans une position active, forme saillie latéralement depuis le cylindre à profil (35), dans lequel le cylindre à profil (35) est monté sur le boîtier (2) du côté du deuxième élément d'attelage coulissant (6) distant du premier élément d'attelage (5), de sorte que, dans sa position active et dans la position fermée de l'élément d'attelage coulissant (6), la came d'actionnement de boulon (36) se trouve au moins pratiquement contre l'élément d'attelage (6).
